# EUROPÄISCHE PATENTSCHRIFT

(11) **EP 2 604 538 B1**
(45) Veröffentlichungstag und Bekanntmachung des Hinweises auf die Patenterteilung: **11.05.2016**
(21) Anmeldenummer: 12190850.3
(22) Anmeldetag: 31.10.2012
(51) Int. Cl.: B65D 1/24, G06K 19/077

(54) **Getränkekasten mit integrierter Transponderanordnung**
Beverage crate with integrated transponder assembly
Caisse à boissons avec agencement de transpondeur intégré

(30) Priorität: 13.12.2011 DE 102011120862
(43) Veröffentlichungstag der Anmeldung: 19.06.2013
(73) Patentinhaber: Felix Schoeller Supply Chain Technologies GmbH & Co. KG, 49086 Osnabrück (DE)
(72) Erfinder: Rademacher, Horst, 49179 Ostercappeln (DE); Suleck, Ingo, 49078 Osnabrück (DE)
(74) Vertreter: Cohausz & Florack

(56) Entgegenhaltungen:
- EP-A1- 1 424 651
- EP-A2- 1 626 364
- WO-A2-2008/116005
- DE-A1- 4 313 049
- DE-A1- 4 439 914
- DE-A1-102006 038 883
- US-A- 2 441 227
- INGO PANKOKE: 'Identifizierung und Verfolgung von Getränkekästen - RFID - die Brücke zwischen Information und Warenfluss', [Online] 15 November 2005, Gefunden im Internet: <URL:http://www.braunschweig.ihk.de/fileadm in/v1/images/content/inhaltsbereich/02_arti kelbilder/09_seminare_und_veranstaltungen/0 0_downloads_artikel/Archiv/01_Info_Veransta ltungen/00_Downloads/04_Seminare_und_Verans taltung/06_i_pankoke.pdf> [gefunden am 2015-10-29]

## Beschreibung

Die Erfindung betrifft einen Getränkekasten zur Aufnahme einer Mehrzahl von Flüssigkeitsbehältern umfassend einen Boden, eine Mehrzahl von Seitenwänden und mindestens eine Transpohderanordnung umfassend eine UHF-Transpondereinrichtung. Darüber hinaus betrifft die Erfindung ein Verfahren zur Integration einer Transponderanordnung in einen Getränkekasten, eine Vorrichtung zur Durchführung des Verfahrens und ein System.

DE 44 39 914 A1 offenbart ein Warenbehältnis bzw. eine Flaschenkiste gemäß dem Oberbegriff des Anspruchs 1, und ein Verfahren nach Oberbergriff des Anspruchs 10.

In der heutigen Zeit können Gegenstände oder Personen mit einem so genannten Radio Frequency Identification (RFID) Transponder versehen werden, um die Gegenstände bzw. Personen zu identifizieren und/oder zu überwachen. Beispielsweise kann ein Objekt in einem Produktionsprozess mit einem RFID Transponder versehen werden, um den Weg des Objekts zu verfolgen.

In dem RFID Transponder können beispielsweise Daten des Gegenstands bzw. der Person, wie Identifikationsdateh, Zugangsdaten, Passwörter, Verlaufsdaten, etc., gespeichert sein und insbesondere berührungslos ausgelesen werden.

Ein RFID Transponder weist zum Senden und Empfangen von Daten eine Antennenstruktur auf. Die Antennenstruktur kann insbesondere eine Antenne sein und mit einem Anpassungsnetzwerk elektrisch verbunden sein. Die Antenne und/oder das Anpassungsnetzwerk weisen eine bestimmte Geometrie auf, wobei unterschiedliche Antennenarten durch unterschiedliche Geometrien gekennzeichnet sind.

Ferner kann ein RFID Transponder eine mit der Antennenstruktur elektrisch verbindbare Schaltungsanordnung aufweisen. Die Schaltungsanordnung kann einen analogen Schaltkreis zum Empfangen und Senden (Transceiver) von Daten, einen digitalen Schaltkreis, wie beispielweise einen Mikrocontroller, und eine Speichereinrichtung aufweisen.

Ein derartiger RFID Transponder kann in einem RFID Kommunikationssystem eingesetzt werden. Ein RFID Kommunikationssystem kann neben zumindest einem RFID Transponder zumindest eine Lese- und/oder Schreibeinrichtung umfassen. Die Lese- und/oder Schreibeinrichtung kann beispielsweise ein hochfrequentes elektromagnetisches Wechselfeld erzeugen. Gelangt der passive oder aktive RFID Transponder in dieses Feld, dann empfängt der RFID Transponder das Signal über die Antennenstruktur. Der RFID Transponder kann durch das empfangene elektromagnetische Wechselfeld aktiviert werden. Die in dem ausgesendeten Feld enthaltenen Informationen können decodiert werden. In Abhängigkeit der decodierten Informationen kann der RFID Transponder entsprechende Anweisungen ausführen und beilspielsweise Daten an die Lese- und/oder Schreibeinrichtung mittels der Antennenstruktur senden.

Auch wenn RFID-Transponder mittlerweile in einer Vielzahl an Objekten zum Einsatz kommen, gibt es bei bestimmten Objekten spezielle Probleme, die bisher einen kommerziellen Einsatz nicht erlauben. Transponderanordnungen mit Ultra-High-Frequency (UHF) Transpondereinrichtungen (860 MHz bis 960 MHz) wurden zum Einsatz in Getränkeindustrie bzw. Getränkekästen. vorgeschlagen (vgl. Es ist aus der Druckschrift "Identifizierung & Verfolgung von Getränkekästen" (http://www.braunschweig.ihk.de/fileadmin/v1/images/content/inhaltsbereich/02 ar tikelbilder/09 seminare und veantaltungen/00 downloads artikel/Archiv/01 Info V eranstaltungen/00 Downloads/04 Seminare und Veranstaltung/06 i pankoke.pdf) ein Getränkekasten bekannt, der einen UHF Transponder aufweisen kann.).

Der Einsatz von derartigen Transponderanordnungen in Getränkekästen kann einen großen Mehrwert insbesondere bei der Organisation des Leerguthandlings aufgrund der Gewinnung von zusätzlichen Informationen haben. Beispielsweise können durch die erfassten Daten Kostenverursacher leichter identifiziert und Umlaufzeiten sowie Bestand des Getränkekastenpools identifiziert werden.

Aus dem Stand der Technik sind auch schon Vorkehrungen für den Einsatz von entsprechenden Transponderanordnungen getroffen worden. Seit dem Jahr 2007 werden eine Vielzahl von neu hergestellten Getränkekästen, insbesondere Bierkästen, mit einer speziellen Aufnahme für die zukünftige Aufnahme von einer Transponderanordnung versehen. Es werden in dem Boden eines Getränkekastens, also einer Getränkekastenunterseite, zylinderförmige Hohlräume (4,5 mm * 33 mm) eingespritzt.

Zwar ist eine Erfassung der Daten aus einer in dem Boden eingesetzten Transponderanordnung mit einer UHF-Transpondereinrichtung bei einem einzelnen leeren Getränkekasten unter Laborbedingungen möglich. Unter realistischen Bedingungen ist es bisher jedoch nicht gelungen, die Daten in fehlerfreier Weise auszulesen. Die Gründe hierfür sind vielfältig.

So bereitet insbesondere die Pulkerfassung, also die (nahezu) gleichzeitige Erfassung einer Mehrzahl an UHF-Transpondereinrichtungen, erhebliche Probleme. In der Regel werden die Getränkekästen auf Trägereinrichtungen, wie eine Palette, angeordnet und mittels eines Gabelstaplers transportiert. Die Daten einer Mehrzahl von Transpondetanordnungen müssen von einer Leseeinrichtung, an der der Gabelstapler vorbei- bzw. durchfahren kann, automatisch erfasst werden. Moderne Gabelstapler transportieren hierbei bis zu 320 Getränkekästen gleichzeitig (8 Paletten à 40 Getränkekästen). Entsprechend ist es erforderlich, dass 320 UHF-Transpondereinrichtungen nahezu gleichzeitig und fehlerfrei durch ein Lesegerät bei einer Vorbeifahrt ausgelesen werden müssen.

Neben der hohen Anzahl an auszulesenden UHF-Transpondereinrichtungen führt das handelsübliche Leergut in den Getränkekästen zu Problemen. So sind in dem Leergut ungewünschte Flüssigkeiten, wie Getränkereste oder Regenwasser (Leergut wird häufig draußen gelagert), und/oder Partikel und Störstoffe, wie beispielsweise Kronkorken oder Zigarettenüberreste, enthalten, welche zu einer Störung der ausgesendeten Signalen führen und somit eine fehlerfreie Auslesung der Transponderanordnungen verhindern.

Die DE 10 2006 038 883 A1 offenbart einen Getränkekasten, bei dem zwischen zwei Griffbereich-Teilen ein RFID Transponder positioniert sein kann. Aus der DE 43 13 049 A1 ist ein Transportbehälter, insbesondere eine Einsteck-Gebinde-Box für pharmazeutische Zwecke, mit einem Transponder bekannt. Die EP 1626 364 A2 betrifft unter anderem RFID Transponder für Weinflasche.

US 2,441,227 beschreibt eine Sprühvorrichtung zum Erzeugen von fadenförmigen, haftfähigen Verbindungssträngen.

Es ist Aufgabe der vorliegenden Erfindung, einen Getränkekasten mit einer UHF-Transpondereinrichtung zur Verfügung zu stellen, welcher eine fehlerfreie Auslesung der Daten insbesondere auch bei einer Pulkerfassung ermöglicht.

Die zuvor hergeleitete und aufgezeigte Aufgabe wird gemäß einem ersten Aspekt der Erfindung durch einen Getränkekasten gemäß dem Patentanspruch 1 gelöst. Der Getränkekasten wird zur Aufnahme einer Mehrzahl von Flüssigkeitsbehältern eingesetzt. Der Getränkekasten umfasst einen Boden und eine Mehrzahl von Seitenwänden. Der Getränkekasten umfasst

mindestens eine Transponderanordnung, wobei die Transponderanordnung eine UHF-Transpondereinrichtung aufweist. Die Transponderanordnung ist in mindestens einem Hohlraum einer Seitenwand integriert, derart, dass die Transponderanordnung von dem Boden um mindestens 60 % der Höhe der Seitenwand beabstandet ist.

Im Gegensatz zum Stand der Technik wird eine fehlerfreie Auslesung sämtlicher UHF-Transpondereinrichtungen auch bei einer Pulkerfassung erzielt, indem die UHF-Transpondereinrichtung nicht im Boden des Getränkekastens, sondern von diesem beabstandet angeordnet ist.

Bei dem Getränkekasten kann es sich um einen herkömmlichen Getränkekasten mit einem Boden und zwei sich gegenüberliegenden Längsseitenwänden und zwei sich gegenüber liegenden Querseitenwänden handeln. Der Getränkekasten kann insbesondere aus einem Kunststoffmaterial mit zumindest teilweise hohlwandigen Seitenwänden gebildet sein. Es versteht sich, dass der Getränkekästen auch aus anderen Materialien, z.B. Holz, hergestellt sein kann. Der Getränkekasten dient zur Aufnahme von Flüssigkeitsbehältern, welche beispielsweise aus Glas oder Kunststoff hergestellt sein können.

Um die Transponderanordnung vor Umwelteinflüssen zu schützen und insbesondere ein widerrechtliches Entfernen der Transponderanordnung von dem Getränkekasten zu verhindern, ist die Transponderanordnung in einem Hohlraum einer Seitenwand angeordnet. Insbesondere kann die Transponderanordnung von oben nicht sichtbar angeordnet sein.

Bevorzugt handelt es sich bei dem Hohlraum um einen ohnehin in der Seitenwand vorgesehenen Hohlraum.

Erfindungsgemäß ist erkannt worden, dass die Auslesung der UHF-Transpondereinrichtung bei Anbringung im Boden des Getränkekastens durch Rückstände in den Flüssigkeitsbehältern beeinträchtigt wird. Um eine Störung der Sendesignale zu reduzieren, ist erfindungsgemäß die UHF-Transpondereinrichtung in einem oberen Bereich der Seitenwand angeordnet. Insbesondere ist die Transpondereinrichtung um zumindest 60 % der Höhe der Seitenwand, vorzugsweise zumindest 70 % er Höhe der Seitenwand von dem Boden des Getränkekastens beabstandet. Durch den deutlich vergrößerten Abstand der UHF-Transpondereinrichtung von den in den Flüssigkeitsbehältern befindlichen Störstoffen, ist eine Beeinflussung der Signale der UHF-Transpondereinrichtungen durch diese Störstoffe deutlich reduziert.

In einfacher Weise können Getränkekästen mit einer UHF-Transpondereinrichtung bereitgestellt werden, welche eine Pulkerfassung erlauben. Rückstände in den Flaschen führen nicht zu fehlerhaften Daten. Eine Verbesserung der Transparenz des Material- und Informationsflusses entlang der gesamten Logistikkette von Mehrwegkästen kann erzielt werden.

Gemäß einer ersten Ausführungsform des erfindungsgemäßen Getränkekastens kann die Transponderanordnung ein flexibles Trägerelement umfassend die UHF-Transpondereinrichtung aufweisen, wobei das Trägerelement umgeformt ist, derart, dass das umgeformte Trägerelement von einem Transponderaufnahmeelement der Transponderanordnung umschlossen ist.

Vorzugsweise kann ein Transponderaufnahmeelement in Form eines Hohlkörpers vorgesehen. Das Transponderaufnahmeelement kann ein Trägerelement mit der UHF-Transpondereinrichtung vollständig umschließen. Die UHF-Transpondereinrichtung ist insbesondere ausreichend gegenüber mechanischen und/oder chemischen Einflüssen geschützt.

Es ist erkannt worden, dass eine kompakte Transponderanordnung, welche besonders für den Einsatz in einem Getränkekasten geeignet ist, hergestellt werden kann, wenn das Trägerelement umgeformt wird. Unter Umformen ist beispielsweise ein Biegen und/oder Falten des Trägerelements zu verstehen. Insbesondere kann hierdurch die Ausdehnung des Trägerelements in zumindest eine Raumrichtung reduziert werden. Die Umformung kann derart sein, dass das Trägerelement in das Transponderaufnahmeelement, welches selbst kompakt gebildet ist, einsetzbar ist. Mit anderen Worten ist ohne eine Umformung ein Integrieren des Trägerelements in das Transponderäufnahmeelement nicht möglich. Das Transponderaufnahmeelement verhindert ferner, dass das Trägerelement beispielsweise aufgrund einer Elastizität des Trägerelements wieder in die Ausgangslage gelangt.

In einfacher Weise kann eine kompakte Transponderanordnung bereitgestellt werden. Neben einer kompakten Ausbildung kann gleichzeitig ein ausreichender Schutz der Transpondereinrichtung vor chemischen und/oder mechanischen Einflüssen durch das Transponderaufnahmeelement, welches die Transpondereinrichtung umschließt, sichergestellt werden.

Grundsätzlich kann das Transponderaufnahmeelement beliebig gebildet sein. Gemäß einer bevorzugten Ausführungsform des erfindungsgemäßen Getränkekastens kann das Transponderaufnahmeelement eine zu dem Hohlraum der Seitenwand korrespondierende Form aufweisen. Der Getränkekasten kann in einfacher Weise mit einer Transponderanordnung nachgerüstet werden, wenn die Form des Transponderaufnahmeelements derart gebildet ist, dass sie zu dem (ohnehin) vorgesehenen Hohlraum korrespondiert.

Gemäß einer weiteren Ausführungsform kann das Transponderaufnahmeelement quaderförmig sein. Alternativ kann das Transponderaufnahmeelement zylinderförmig sein. Gerade diese beiden Aufnahmeformen, insbesondere entsprechende Hohlkörper, können in einfacher Weise hergestellt und in (ohnehin) vorgesehene Hohlräume des Getränkekastens eingesetzt werden. Es versteht sich, dass ein Transponderaufnahmeelement auch mehreckig, beispielsweise dreieckförmig, oder elliptisch geformt sein kann.

Wie bereits beschrieben wurde, sind Störstoffe am Flaschenboden eine Ursache für eine erhöhte Störanfälligkeit bei der Auslesung der UHF- Transpondereinrichtungen. Um die Störanfälligkeit zu verringern, ist vorzugsweise der Abstand zwischen UHF-Transpondereinrichtung und Getränkekastenboden maximiert. Die Transponderanordnung kann gemäß einer weiteren Ausführungsform der Erfindung die Innenseite der oberen Kante der Seitenwand kontaktieren. Hierdurch kann der Abstand zwischen Boden und UHF-Transpondereinrichtung maximiert werden.

Eine Mehrzahl von Getränkekästen wird in der Regel auf Trägerelementen, insbesondere Paletten, neben- und übereinander angeordnet. Problematisch hierbei ist, dass sich unmittelbar benachbart angeordnete UHF-Transpondereinrichtungen gegenseitig beeinflussen und insbesondere stören können. Um zu verhindern, dass zwei Transponderanordnungen bei einer Stapelung von einer Mehrzahl an Getränkekästen auf einer Palette unmittelbar aneinander grenzen, kann gemäß einer bevorzugten Ausführungsform des erfindungsgemäßen Getränkekastens die Transponderanordnung von einer Ecke des Getränkekastens um zumindest 3 cm, vorzugsweise um zumindest 5 cm, beabstandet sein. Alternativ oder zusätzlich kann die Transponderanordnung von einer Mitte einer Seitenwand um zumindest 3 cm, vorzugsweise um zumindest 5 cm, beabstandet sein. Insbesondere wenn an den Eckbereichen und den Mittenbereiche der Seitenwände Transponderanordnungen nicht positioniert werden, kann die Gefahr verringert werden, dass Transponderanordnungen direkt nebeneinander angeordnet sind. Bevorzugt kann vorgesehen sein, dass die Transponderanordnungen in sämtlichen Getränkekästen in der gleichen Seitenwand an der gleichen Position angeordnet sind. Aufgrund der unsymmetrischen Anordnung ist es nicht möglich, dass die Transponderanordnungen von auf einer Palette gestapelten Getränkekästen direkt benachbart zueinander sind.

Darüber hinaus ist erkannt worden, dass die Störanfälligkeit noch weiter verringert und die Lesereichweite verbessert werden kann, wenn die UHF-Transpondereinrichtung auch in einer horizontalen Ebene von den Flüssigkeitsbehältern maximal beabstandet ist. Grund hierfür ist, dass Flüssigkeitsbehälter, insbesondere Flaschen, am Flaschenkopf Kronkorken aufweisen können. So kommt es immer wieder vor, dass nach einem Verzehr des Inhalts leere Flaschen mit einem Kronkorken wieder verschlossen werden. Die Metall umfassenden Kronkorken können die Ausbreitung von elektromagnetischen Wellen beeinflussen und insbesondere das Aussenden der Signale der UHF-Transpondereinrichtungen stören. Vorzugsweise kann daher der Abstand der UHF-Transpondereinrichtung zu den Flaschenköpfen in einer horizontalen Ebene maximiert sein. Insbesondere kann gemäß einer bevorzugten Ausführungsform des erfindungsgemäßen Getränkekastens an einer Seitenwand eine erste Aufnahme zum Aufnehmen eines Flüssigkeitsbehälters vorgesehen sein und an dieser Seitenwand mindestens eine weitere zu der ersten Aufnahme benachbart angeordnete Aufnahme zum Aufnehmen eines Flüssigkeitsbehälters vorgesehen sein. Die Transponderanordnung bzw. die UHF-Transpondereinrichtung kann in dieser Seitenwand in einem Grenzbereich der benachbarten Aufnahmen angeordnet sein. Der Grenzbereich ist der Bereich, welcher den größten Abstand zu den in der Aufnahme anordnenbaren Flüssigkeitsbehältern aufweist. Eine Aufnahme kann hierbei zumindest teilweise durch die Seitenwand und durch weitere stegförmige Elemente gebildet sein. Bevorzugt kann die Transponderanordnung (genau) in der Mitte zwischen zwei benachbarten Aufnahmen angeordnet sein. Wenn in der Mitte jedoch aus Stabilitätsgründen in der Seitenwand ein Steg vorgesehen ist, kann die Transponderanordnung bevorzugt unmittelbar an diesen Steg angeordnet werden.

In einer bevorzugten Ausführungsform kann zumindest eine der beiden benachbarten Aufnahmen eine Eckaufnahme sein. Bei herkömmlichen Getränkekästen kann hierdurch nicht nur ein maximaler Abstand zu den beiden nächstliegenden Flüssigkeitsbehältern erreicht werden, sondern die Transponderanordnung bzw. die UHF-Transpondereinrichtung kann gleichzeitig auch um zumindest 3 cm von einer Ecke und um zumindest 3 cm von der Mitte einer Seitenwand beabstandet angeordnet sein. Grund hierfür ist insbesondere, dass bei einem Abstand der Transponder von zumindest 6 cm die gegenseitige Beeinträchtigung eines reaktiven und abstrählenden Nahfelds einer Antennenstruktur gering ist.

Grundsätzlich kann die Transporideranordnung in dem Hohlraum auf verschiedene Weise fixiert sein. Beispielsweise kann eine Pressverbindung vorgesehen sein. Im erfindungsgemäßen Getränkekasten ist die Transponderanordnurig durch ein Haftmittel in dem Hohlraum fixiert. Beispielsweise kann ein geeigneter Klebstoff aufgebracht sein. In einfacher Weise und mit einem geringen Aufwand kann die Transponderanordnung in einem Getränkekasten angeordnet werden. Insbesondere wird eine einfache Nachrüstbarkeit von unterschiedlich gebildeten und insbesondere unterschiedliche Hohlräume aufweisenden Getränkekästen ermöglicht.

Beispielsweise kann der Hohlraum, welcher die Transponderanordnung umfasst, vollständig mit dem Haftmittel, wie Kunststoff, ausgefüllt sein. Erfindungsgemäß ist das Haftmittel derart aufgebracht, dass eine Mehrzahl von fadenförmigen Verbindungen zwischen der Seitenwand und der Transponderanordnung zum Fixieren der Transponderanordnung in dem Hohlraum vorgesehen ist. Insbesondere kann ein spinnennetzartiges Kunststoffnetz erzeugt werden. Eine Mehrzahl von fadenförmigen Verbindungen kann insbesondere zwischen der Innenwand der Seitenwand und der Transponderanordnung gebildet sein. Die Transponderanordnung kann in sicherer Weise in dem Hohlraum fixiert sein. Gleichzeitig kann ein.Getränkekasten mit einem geringen Gewicht bereitgestellt werden. Zudem kann bei einem Reinigungsprozess des Getränkekastens Wasser ungehindert durch das Kunststoffnetz fließen.

Darüber hinaus können die fadenförmigen Verbindungen aus einem elastischen Kunststoffmaterial gebildet sein. Es ist erkannt worden, dass herkömmliche Anbringungsoptionen keine ausreichend sichere Fixierung der Transponderanordnung ermöglichen. Grund hierfür sind die auf den Getränkekasten und somit auf die Verbindung zwischen Transponderanordnung und Getränkekasten zumindest zeitweise wirkenden hohen Kräfte. So sind in der Praxis Stapelung von 5 Paletten mit je 40 Getränkekästen übereinander üblich. Hierdurch wird ein Getränkekasten stark gestaucht. Durch ein spinnennetzartiges Kunststoffnetz kann die Transponderanordnung elastisch im Getränkekasten fixiert werden. Eine besonders sichere Fixierung auch bei extremen Stauchungen kann gewährleistet werden.

Wie bereits beschrieben wurde, kann ein Getränkekasten in der Seitenwand ohnehin einen Hohlraum aufweisen. Ferner ist es bei Getränkekästen ferner üblich, dass (ohnehin) Öffnungen im Boden vorgesehen sind. Insbesondere können die Hohlräume von der Getränkekastenunterseite durch die Öffnungen (ohnehin) zugänglich sein. Vorzugsweise kann der Hohlraum, in welchem die Transponderanordnung angeordnet ist, ausschließlich durch eine Öffnung in dem Boden des Getränkekasten zugänglich sein.

Zugänglich ist insbesondere derart zu verstehen, dass eine Anbringung der Transponderanordnung ausschließlich durch eine Öffnung im Boden des Getränkekastens erfolgt. Es ist nicht erfoderlich, in den Getränkekasten eine zusätzliche Bohrung oder dergleichen vorzusehen. Auch ist die Transponderanordnung ausschließlich vom Boden aus sichtbar. Der Getränkekasten, also der Rahmen als solches, weist keine Änderungen bzw. Modifizierungen auf.

Ein weiterer Aspekt der Erfindung ist ein Verfahren zum Integrieren einer Transponderanordnung in einen Getränkekasten gemäß dem Patentanspruch 10. Mit dem Verfahren kann insbesondere ein zuvor beschriebener Getränkekasten hergestellt werden. Der Getränkekasten weist einen Boden und eine Mehrzahl von Seitenwänden auf. Das Verfahren umfasst die Schritte:
- Bereitstellen der Transponderanordnung umfassend eine UHF-Transpondereinrichtung,
- Einbringen der Transponderanordnung in einen Hohlraum einer Seitenwand des Getränkekastens, und
- Fixieren der Transponderanordnung in dem Hohlraum, derart, dass die UHF-Transpondereinrichtung von dem Boden um mindestens 60 % der Höhe der Seitenwand beabstandet ist, wobei
- ein Haftmittel zur Fixierung der Transponderanordnung in den Hohlraum eingesprüht wird, derart, dass eine Mehrzahl von fadenförmigen Verbindungen zwischen der Seitenwand und der Transponderanordnung zum Fixieren der Transponderanordnung in dem Hohlraum gebildet wird.

In einfacher Weise kann ein Getränkekasten hergestellt und insbesondere eine Transponderanordnung in einen Getränkekasten integriert werden, so dass eine sichere Auslesung der UHF-Transpondereinrichtung auch bei einer Pulkerfassung möglich ist.

Um die Transponderanordnung in besonders einfacher Weise in einen Hohlraum eindringen zu können, kann gemäß einer bevorzugten Ausführungsform des Verfahrens der Getränkekasten zunächst in ein Halteeinrichtung eingespannt und auf den Kopf gedreht werden. Mit anderen Worten ragt die Unterseite, also der Boden des Getränkekastens nach oben. Bevorzugt kann zwischen einer Seitenwand und einer horizontalen Bezugsebene, wie der Erdoberfläche, ein Winkel zwischen 10° und 90°, bevorzugt von ca. 30° eingestellt werden. Dann kann die Transponderanordnung durch eine (ohnehin) vorgesehene Öffnung im Boden in einen (ohnehin) vorgesehen Hohlraum der Seitenwand eingebracht und mittels der Schwerkraft in die Endposition, welche insbesondere durch die Innenseite der oberen Kante der Seitenwand definiert sein kann, gebracht werden.

Insbesondere kann ein zuvor beschriebenes netzförmiges und elastisches Kunststoffnetz erzeugt werden. Eine sichere Fixierung wird bereitgestellt.

Ein weiterer Aspekt der Erfindung ist eine Vorrichtung gemäß dem Patentanspruch 11. Die Vorrichtung zur Durchführung des zuvor beschriebenen Verfahrens umfasst mindestens eine Halteeinrichtung zum Einspannen des Getränkekastens, mindestens ein Einbringungsmittel zum Einbringen der Transponderanordnung den Hohlraum des Getränkekastens und mindestens eine Sprühvorrichtung zum Aufbringen des Haftmittels zum Fixieren der Transponderanordnung in dem Hohlraum. Die Sprühvorrichtung ist vorgesehen um das zuvor beschriebene netzförmige und elastische Kunststoffnetz zu erzeugen.

Ein noch weiterer Aspekt der Erfindung ist ein System umfassend zumindest eine UHF-Transponderleseeinrichtüng und mindestens einen zuvor beschriebenen Getränkekasten. Die UHF-Transponderleseeinrichtung ist insbesondere dazu eingerichtet, die von einem Gabelstapler an der Lesevorrichtung vorbeibewegten und in einer Mehrzahl an Getränkekästen integrierten UHF-Transpondereinrichtungen auszulesen. Die ausgelesenen Daten können mittels geeigneter Mittel, wie einem geeigneten Enterprise-Ressource-Planing (ERP) System ausgewertet werden.

Es gibt nun eine Vielzahl von Möglichkeiten, den erfindungsgemäßen Getränkekasten, das erfindungsgemäße Verfahren zur Integration einer Transponderanordnung in einen Getränkekasten, die erfindungsgemäße Vorrichtung zur Durchführung des Verfahrens und das erfindungsgemäße System auszugestalten und weiterzubilden. Hierzu sei seinerseits verwiesen auf die den nebengeordneten Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Getränkekastens gemäß der vorliegenden Erfindung,
- Fig. 2: eine schematische Ansicht eines Ausführungsbeispiels eines Trägerelements mit einer für den Einsatz in einem Getränkekasten geeigneten UHF-Transpondereinrichtung,
- Fig. 3a: eine schematische Ansicht eines ersten Ausführungsbeispiels eines für den Einsatz in einem Getränkekasten geeigneten Transponderaufnahmeelements,
- Fig. 3b: eine schematische Ansicht eines Weiteren Ausführungsbeispiels eines für den Einsatz in einem Getränkekasten geeigneten Transponderaufnahmeelements,
- Fig. 4a: eine schematische Ansicht eines ersten Ausführungsbeispiels einer für den Einsatz in einem Getränkekasten geeigneten Transponderanordnung,
- Fig. 4b: eine schematische Ansicht eines weiteren Ausführungsbeispiels einer für den Einsatz in einem Getränkekasten geeigneten Transponderanordnung,
- Fig. 5: eine schematische Ansicht eines weiteren Ausführungsbeispiels eines Getränkekastens gemäß der vorliegenden Erfindung,
- Fig. 6: eine schematische Draufsicht eines Ausführungsbeispiels eines Getränkekastens gemäß der vorliegenden Erfindung,
- Fig. 7: eine schematische Draufsicht eines weiteren Ausführungsbeispiels eines Getränkekastens gemäß der vorliegenden Erfindung, und
- Fig. 8: ein Flussdiagramm eines Ausführungsbeispiels eines Verfahrens gemäß der Erfindung zur Integration einer Transponderanordnung in einen Getränkekasten.

Nachfolgend werden gleiche Bezugszeichen für gleiche Elemente verwendet.

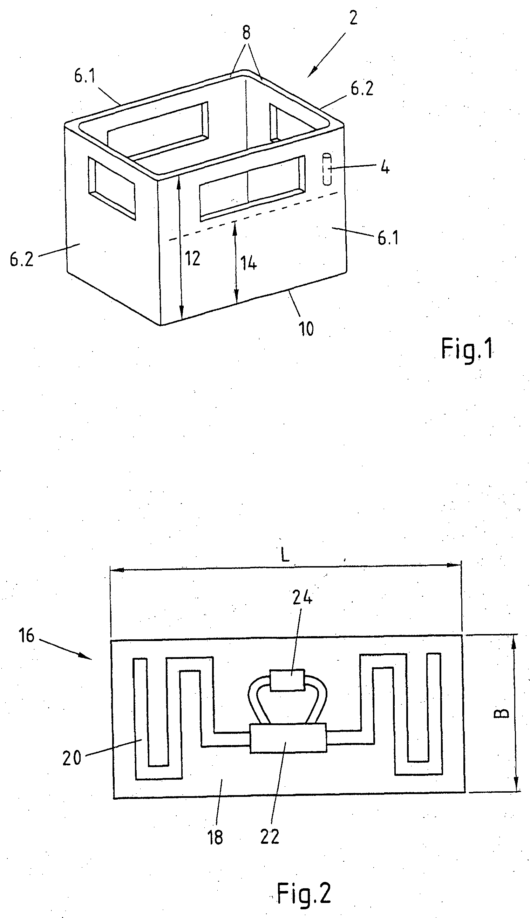

Figur 1 zeigt ein erstes Ausführungsbeispiel eines Getränkekastens 2 gemäß der vorliegenden Erfindung. Der Getränkekasten 2 kann aus Kunststoff gebildet sein und zur Aufnahme einer Mehrzahl von Flüssigkeitsbehältern, wie Flaschen, dienen.

Der vorliegende Getränkekasten 2 umfasst eine Transponderanordnung 4 mit einer UHF-Transpondereinrichtung. Durch die gestrichelten Linien der Transponderanordnung 4 wird angedeutet, dass die Transponderanordnung 4 nicht sichtbar ist, sondern in einem Hohlraum des Getränkekastens 2 angeordnet ist. Nachfolgend werden für den Einsatz in dem Getränkekasten 2 besonders geeignete Ausführungsbeispiele einer Transponderanordnung 4 erläutert.

Der vorliegend rechteckförmige Getränkekasten 2 umfasst eine Mehrzahl von Seitenwänden 6 und einen Boden 10. Insbesondere sind zwei gegenüberliegende Längsseitenwände 6.1 und zwei gegenüberliegende Querseitenwände 6.2 vorgesehen. Die Seitenwände 6 weisen eine obere Kante 8 auf. In den Seitenwänden 6 können Ausnehmungen zum Greifen und insbesondere Heben des Getränkekastens 2 vorgesehen sein.

Sämtliche Seitenwände 6 weisen in der Regel im Wesentlichen die gleiche Höhe 12 auf. Es ist erkannt worden, dass für eine Pulkerfassung die Position der Transponderanordnung 4 im Getränkekasten 2 nicht beliebig gewählt werden kann. So ist es erforderlich, dass die Transponderanordnung 4 zumindest um einen Abstand 14 von dem Boden 10 des Getränkekastens 2 beabstandet ist. Insbesondere ist erkannt worden, dass der Abstand 14 mindestens 60% der Höhe 12 der Seitenwand 6 betragen sollte. Die entsprechende Grenze ist durch die gestrichelte Linie angedeutet.

Für den Fall, dass der Getränkekasten eine andere Form und beispielsweise Seitenwände mit unterschiedlichen Höhen aufweist, kann die Transponderanordnung bevorzugt in die Seitenwand mit der größten Höhe eingesetzt sein.

Figur 2 zeigt ein Ausführungsbeispiel einer auf einem Trägerelement 18 angeordneten UHF-Transpondereinrichtung 16. Im vorliegenden Ausführungsbeispiel ist ein flexibles Trägerelement 18 vorgesehen. Das Trägerelement 18 kann insbesondere aus einem nicht leitenden Material gebildet sein. Vorteilhafterweise kann das Trägerelement 18 aus einem Kunststoffmaterial hergestellt sein. Es versteht sich, dass gemäß anderen Varianten der Erfindung auch andere flexible Materialien, wie Papier, Textilien oder dergleichen, eingesetzt werden können.

Die dargestellte UHF-Transpondereinrichtung 16 umfasst eine Antennenstruktur 20, ein Anpassungsnetzwerk 22 und einen integrierten Schaltkreis 24. Der integrierte Schaltkreis 24 kann mit dem Anpassungsnetzwerk 22 elektrisch, induktiv und/oder kapazitiv gekoppelt sein. Ferner kann das Anpassungsnetzwerk 22 elektrisch mit der Antennenstruktur 20 verbunden sein. Eine elektrische Kopplung bzw. eine galvanische Kopplung der Antennenstruktur 20 und des integrierten Schaltkreises 24 ist aufgrund einer erhöhten Leistung bevorzugt. Grundsätzlich wäre eine induktive oder kapazitive Kopplung zwischen den Komponenten denkbar.

Die Antennenstruktur 20 kann insbesondere als eine Dipolantenne mit zwei leitfähigen geteilten Polabschnitten gebildet sein. Vorliegend ist eine spiralförmige Antennenstruktur 20 vorgesehen. Diese eignet sich aufgrund des kompakten Designs besonders gut. Die Polabschnitte können insbesondere symmetrisch zueinander gebildet sein. Bei dem abgebildeten Anpassungsnetzwerk 22 handelt es sich insbesondere um ein T-Anpassungsnetzwerk.

Darüber hinaus können die geometrischen Maße der Antennenstruktur 20 und/oder des Anpassungsnetzwerks 22 an ein Hüllmaterial angepasst sein. Hierbei ist unter dem Hüllmaterial vorzugsweise sämtliches Material zu verstehen, welches die UHF-Transpondereinrichtung 16 im verbauten Zustand, also in dem Getränkekasten 2, umschließt. Hierzu können insbesondere ein Kernelement, das Transponderaufnahmeelement und/oder das Material der Seitenwand 6 des Getränkekastens 2 zählen. Vorzugsweise können Materialparameter von diesem Hüllmaterial, welche die Transmission von elektromagnetischen Wellen beeinflussen, wie eine relative Permittivität und/oder eine relative Permeabilität und/oder eine Materialstärke des Hüllmaterials, berücksichtigt werden.

Die eingesetzte UHF-Transpondereinrichtung 16 weist eine erhöhte Leistung im Vergleich zu Transpondereinrichtungen auf, welche in niedrigeren Frequenzbereichen arbeiten.

Das Trägerelement 18 umfassend die UHF-Transpondereinrichtung 16 kann in beliebiger Weise hergestellt sein. Beispielsweise kann die UHF-Transpondereinrichtung 16 zumindest teilweise durch Bedrucken des Trägerelements 18 aufgebraucht sein. Insbesondere erlaubt dies eine Masserifertigung. Auch kann die UHF-Transpondereinrichtung 16 zumindest teilweise durch Ätzen, Lasern und/oder Stanzen aufgebracht werden.

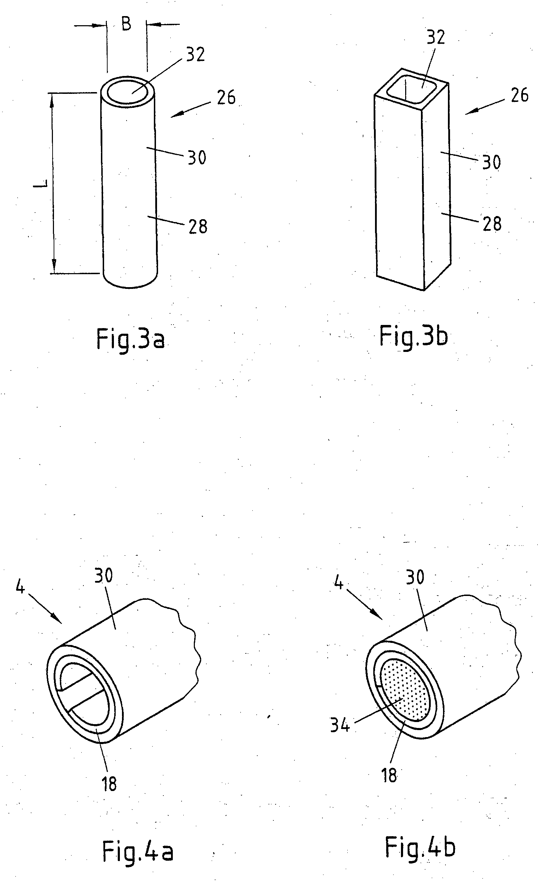

In den Figuren 3a und 3b sind beispielhafte Ausführungsbeispiele von Transponderaufnahmeelementen 26 abgebildet. Wie aus diesen beispielhaften Figuren zu erkennen ist, sind die Transporideraufnahmeelemente 26 als Hohlkörper 28.gebildet.

In der Figur 3a ist das Tränsponderaufnahmeelement 26 als zylinderförmiger Hohlkörper 28 gebildet. Der Hohlkörper 30 weist eine Innenwand 32 bzw. eine Innenform 32 und eine Außenwand 30 bzw. eine Außenform 30 auf. Vorzugsweise ist die Außenform 30 des Transponderaufnahmeelements 26 insbesondere derart gebildet, dass sie zu einer Innenform eines Hohlraums eines Getränkekastens 2 korrespondiert, in der die Transponderanordnung 4 einsetzbar ist.

In der Figur 3b ist ein Transponderaufnahmeelement 26 in Form eines quaderförmigen Hohlkörpers 28 dargestellt. Vorzugsweise kann die Innenwand 32 des quaderförmigen Hohlkörpers 28 an den Ecken Radien aufweisen. Grund hierfür ist, dass eine in der Aufnahme 26 angeordnete Transpondereinrichtung 16 bzw. das Trägerelement 16 an der Innenwand 32, insbesondere auch in den Eckbereichen, anliegen kann, ohne dass durch eine zu starke Biegung der Transpondereinrichtung 16 bzw. des Trägerelements 18 diese/s beschädigt wird.

Es versteht sich, dass gemäß anderen Varianten der Erfindung das Transponderaufnahmeelement 26 auch in anderer Form, beispielsweise dreieckförmig, oval, etc. gebildet sein kann.

Zusätzlich kann das Transponderaufnahmeelement ein Verlängerungselement aufweisen. Das Verlängerungselement kann dazu dienen, die Transponderanordnung an einer bestimmten Position innerhalb des Hohlraums des Getränkekastens zu positionierten.

Es versteht sich hierbei, dass für eine kompakte Transponderanordnung 4 der Hohlkörper 28 möglichst dünnwandig gebildet sein kann. Beispielhafte Wanddicken liegen zwischen 0,1 mm und 2 mm.

Es versteht sich ferner, dass ein Transponderaufnahmeelement 26 einen Boden und einen Deckel zum Verschließen der Öffnung/en aufweisen kann. Der Deckel und/oder der Boden kann ein separates Bauteil oder integraler Bestandteil eines Transponderaufnahmeelements 26 sein. Ein vollständiges und insbesondere dichtes Umschließen ist möglich. Flüssigkeiten oder dergleichen können nicht in das Transponderaufnahmeelement eintreten.

Um die UHF-Transpondereinrichtung 16 bzw. das flexible Trägerelement 18 in einem Hohlkörper 28 anzuordnen, ist es erforderlich, die Transpondereinrichtung 16 bzw. das flexible Trägerelement 18 entsprechend umzuformen. Beispielsweise kann das Trägerelement 18 entsprechend gebogen und/oder gefaltet sein.

Die Figur 4a zeigt beispielhaft an einem zylinderförmigen Hohlkörper 28 gemäß der Figur 3a die Anordnung einer UHF-Transpondereinrichtung 16 bzw. eines Trägerelements 18 innerhalb des Transponderaufnahmeelements 26.

Im dem Ausführungsbeispiel der Transponderanordnung 4 gemäß Figur 4a ist die UHF-Transpondereinrichtung 16 bzw. das flexible Trägerelement 18 derart gebogen, dass sie/es in dem Hohlkörper 28 angeordnet werden kann. Wie zu erkennen ist, liegt das Trägerelement 18 im Wesentlichen an der Innenwand 30 des Hohlkörpers 26 an. Insbesondere ist die Form des Trägerelements 18 an die Form 30 des Hohlkörpers 28 angepasst. Durch das Umformen des Trägerelements 18 und der Anordnung innerhalb des Transponderaufnahmeelements 26 wird insgesamt ein kompakteres Design erzielt.

In dem vorliegenden Ausführungsbeispiel berühren sich die gebogenen Enden des Trägerelements 18 nicht. Mit anderen Worten sind die Enden des Trägerelements 18 voneinander beabstandet.

Ferner ist die Länge L des zylinderförmigen Transponderaufnahmeelements 26 im Wesentlichen gleich der Länge L des flexiblen Trägerelements 18. Mit anderen Worten ragt das Trägerelement 18 nicht aus der Öffnung des zylinderförmigen Hohlkörpers 28 hinaus. Vorzugsweise kann es nahezu bündig mit dem Rand der Öffnung des Hohlkörpers 28 abschließen. Die Breite B bzw. der Durchmesser B des zylinderförmigen Transponderaufnahmeelements 26 ist kleiner als die Länge L des flexiblen Trägerelements 18.

Es versteht sich, dass grundsätzlich auch die Länge L des zylinderförmigen Transponderaufnahmeelements 16 im Wesentlichen gleich der Breite B des flexiblen Trägerelements 18 und die Breite B bzw. der Durchmesser B des zylinderförmigen Transponderaufnahmeelements 26 kleiner als die Länge L des flexiblen Trägerelements 18 sein kann.

Ferner können die Enden des Trägerelements 18 in Kontakt zueinander stehen. Mit anderen Worten kann der Umfang der Innenwand des Hohlkörpers 28 im Wesentlichen der Breite B (oder alternativ der Länge L) des flexiblen Trägerelements 18 entsprechen. Grundsätzlich können sich die Enden eines Trägerelements 18 auch überschneiden, solange sich die Antennenstruktur 20 nicht überschneidet. Hierdurch kann ein noch kompakteres Design bereitgestellt werden.

In der Figur 4b ist ein weiteres Ausführungsbeispiel von einer bevorzugten Transponderanordnungen 4 dargestellt. Im Unterschied zu den Ausführungsbeispiel gemäß der Figur 4a weist die Transponderanordnung 4 gemäß der Figur 4b ein Kernelement 34 bzw. Innenmaterial 34 auf. Vorzugsweise ist der gesamte Innenbereich mit einem Kernelement 34 gefüllt.

Es ist erkannt worden, dass durch ein Kernelement 34 nicht nur die Stabilität der Transponderanordnung 4 erhöht, sondern auch die Leistungsfähigkeit der UHF-Transpondereinrichtung 16 bei kleiner Geometrie verbessert werden kann, wenn ein spezielles Füllmaterial als Innenmaterial eingesetzt wird.

Insbesondere kann das Kernelement 34 vorzugsweise aus einem Material mit einer Permittivität von zumindest größer als 1, vorzugsweise zumindest größer als 2, in einem Frequenzbereich von 860 MHz bis 960 MHz hergestellt sein.

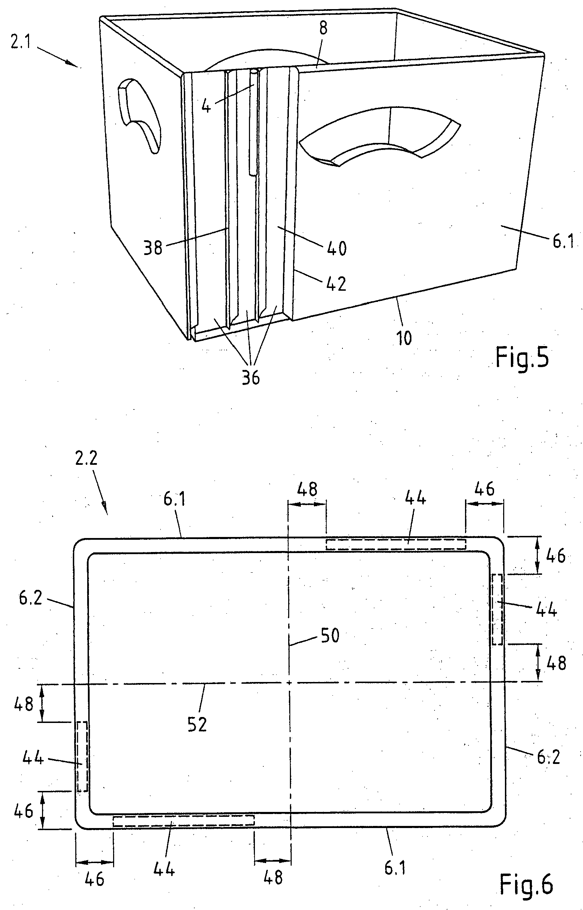

Figur 5 zeigt eine schematische Ansicht eines weiteren Ausführungsbeispiels eines Getränkekastens 2.1 gemäß der vorliegenden Erfindung. Insbesondere ist der Getränkekasten 2.1 zumindest teilweise in einer Schnittansicht dargestellt.

Wie der Figur 5 zu entnehmen ist, weist die Seitenwand 6.1 (ohnehin) Hohlräume 36 auf. Die aus einem Kunststoffmaterial hergestellten Getränkekästen 2.1 weisen in der Regel aus Gewichtsgründen Hohlräume 36 in den Seitenwänden 6.1 auf. Aus Stabilitätsgründen können Stege 38 zwischen einer inneren Innenwand 40 und einer äußeren Innenwand 42 vorgesehen sein.

Im vorliegenden Ausführungsbeispiel ist eine zylinderförmige Transponderanordnung 4 in einem Hohlraum 36 der Seitenwand 6.1 angeordnet. Insbesondere grenzt ein Ende der Transponderanordnung 4 an die obere Kante 8 der Seitenwand 6.1. Das untere Ende der Transponderanordnung 4 ist um zumindest 60% der Höhe der Seitenwand 6.1 von dem Boden 10 des Getränkekastens 2.1 beabstandet.

Im Allgemeinen werden Getränkekästen nebeneinander auf Trägerelementen, wie Paletten, angeordnet. Es ist erkannt worden, dass sich die UHF-Transpondereinrichtungen gegenseitig negativ beeinflussen, wenn sie (unmittelbar) benachbart zueinander angeordnet sind. Für eine bessere Auslesbarkeit sind die Transponderanordnungen nicht nur in einer bestimmten und vorgebbaren Höhe, sondern vorzugsweise auch in einer bestimmten seitlichen Position angeordnet.

In der Figur 6 ist eine schematische Draufsicht eines Getränkekasten 2.2 gemäß der vorliegenden Erfindung dargestellt. Mit dem Bezugszeichen 44 sind mögliche Bereiche gekennzeichnet, in welchen eine Transponderanordnung bevorzugt integriert sein kann, ohne dass die Gefahr besteht, dass auf einer Palette die Getränkekästen 2.2 derart angeordnet werden können, dass die Transponderanordnungen unmittelbar benachbart zueinander liegen.

Zunächst ist erkannt worden, dass die Transponderanordnung nicht in bestimmten Bereichen angeordnet werden sollte. Hierzu zählen insbesondere die Eckbereiche und die mittleren Bereiche der jeweiligen Seitenwände 6. Vorzugsweise ist die Transponderanordnung von einer Ecke mit einem Abstand 46 und/öder von der Mitte einer Seitenwand 6 mit einem Abstand 48 beabstandet angeordnet. Beispielsweise kann die Transponderanordnung zumindest 3 cm von einer Ecke und/oder der Mitte einer Seitenwand 6 beabstandet sein. Dies führt zu einem Mindestabstand zweier benachbarter Transponderanordnungen von zwei auf einer Palette angeordneten Getränkekästen 2.2 von 6 cm. Ein entsprechender Mindestabstand kann eine ausreichende Auslesbarkeit gewährleisten und insbesondere die gegenseitige Beeinflussung der UHF-Transpondereinrichtungen auf ein zumindest ausreichendes Maß reduzieren.

Die Definition von mehr als einem Bereich 44 zur Positionierung einer Transponderanordnung in einem Getränkekasten hat den Vorteil, dass unterschiedliche Getränkekästen, welche beispielsweise eine Anordnung in bestimmten Bereichen 44 nicht erlauben, dennoch zusammen auf einer Palette gestapelt werden können, ohne dass sich die jeweiligen Transponderanordnung beeinflussen, solange sämtliche Transponderanordnungen in einem der Bereiche 44 positioniert sind.

Bevorzugt kann die Transponderanordnung bei jedem Getränkekasten im gleichen Bereich, beispielsweise an der unteren Längsseitenwand angeordnet werden.

Es versteht sich, dass gemäß anderen Varianten der Erfindung die Bereiche auch an der Mittenachse 50, 52 (Längsachse 52 oder Querachse 50) gespiegelt angeordnet sein können.

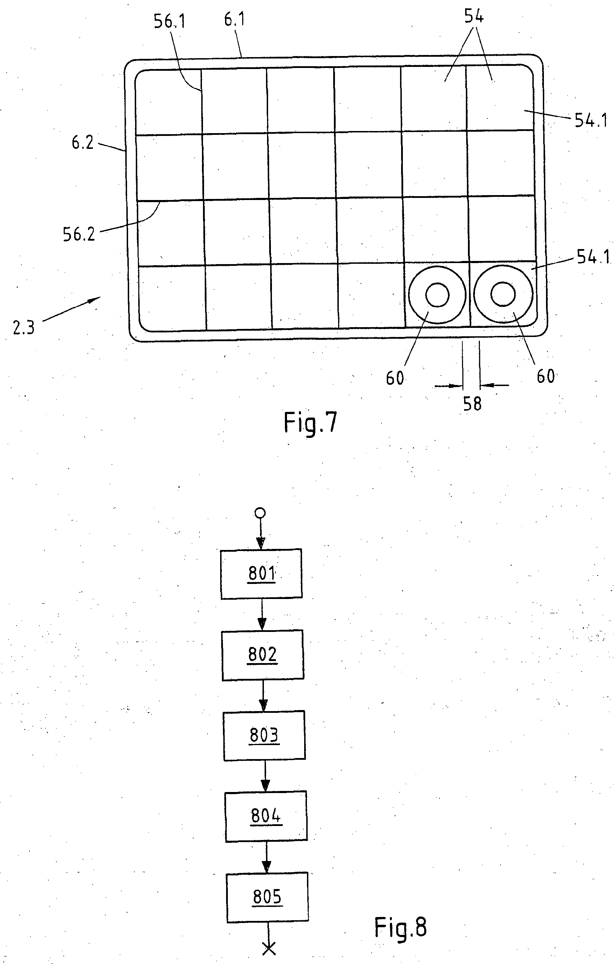

Figur 7 zeigt eine schematische Draufsicht eines weiteren Ausführungsbeispiels eines Getränkekastens 2.3 gemäß der vorliegenden Erfindung. Insbesondere ist der Getränkekasten 2.3 detaillierter als das in Figur 6 dargestellte Ausführungsbeispiel abgebildet.

Der dargestellte Getränkekasten 2.3 weist eine Mehrzahl von Aufnahmen 54 zur Aufnahme von Flüssigkeitsbehältern 60, wie Flaschen 60, auf.

Die Aufnahmen 54 werden durch eine Mehrzahl von Querstegen 56.2, welche (nahezu) parallel zu den Querseitenwänden 6.2 angeordnet sind, eine Mehrzahl an Längsstegen 56.1, welche (nahezu) parallel zu den Längsseitenwänden 6.1 angeordnet sind, und zumindest teilweise durch die Seitenwände 6.1, 6.2 gebildet.

Die hier nicht dargestellte Transponderanordnung kann vorzugsweise in einem Hohlraum einer Seitenwand 6, welcher sich in einem Grenzbereich 58 zwischen zwei benachbarten Aufnahmen 54 befindet, angeordnet sein. Vorzugsweise kann der Hohlraum in einem Grenzbereich 58 zwischen einer Eckaufnahme 54.1 und einer hierzu benachbarten Aufnahme 54 angeordnet sein.

Bevorzugt kann die Transponderanordnung in einem Hohlraum (genau) an der Grenze zwischen zwei (unmittelbar) benachbarten Aufnahmen 54, also auf Höhe eines Quer- oder Längsstegs 56.1, 56.2, angeordnet sein. Es kann jedoch vorkommen, dass an der Grenze ein Steg 38 in der Seitenwand vorgesehen ist. In diesem Fall ist es bevorzugt, die Transponderanordnung möglichst nah an diese Grenze und insbesondere an den Steg 38 anzuordnen, wie es in Figur 5 beispielhaft gezeigt ist.

Vorteilhaft an der Position 58 ist, dass die Transponderanordnung an einer Stelle angeordnet ist, die einen maximalen Abstand zu den Flüssigkeitsbehältern 60 aufweist. Ein maximaler Abstand ist bevorzugt, da die Flüssigkeitsbehälter 60 oder in bzw. an ihnen angeordnete Objekte, wie Kronkorken, die Auslesbarkeit der UHF-Transpondereinrichtungen stören können. Durch einen maximalen Abstand können diese Beeinflussungen minimiert werden. Gleichzeitig befindet sich der Bereich 58 gemäß der Figur 7 auch in einem Bereich 44 gemäß der Figur 6.

Es versteht sich, dass gemäß anderen Varianten der Erfindung keine durchgehenden und/oder geradlinigen Stege 56 vorgesehen sein müssen. Beispielsweise kann die Form der Stege an die aufzunehmenden Flüssigkeitsbehälter angepasst sein.

Figur 8 zeigt ein beispielhaftes Flussdiagramm eines Ausführungsbeispiels eines Verfahrens gemäß der Erfindung zur Integration bzw. Anordnung einer Transponderanordnung in einen Getränkekasten zur Herstellung eines zuvor beschriebenen Getränkekastens 2.

In einem ersten Schritt 801 wird zunächst ein Getränkekasten 2 bereitgestellt. Insbesondere kann ein herkömmlicher und aus einem Kunststoffmaterial gebildeter Getränkekasten 2 bereitgestellt werden. Dieser kann mindestens einen ohnehin vorgesehen Hohlraum 36 in mindestens einer Seitenwand 6 aufweisen. Dieser Hohlraum 36 kann zudem ohnehin von dem Boden des Getränkekastens 2 über eine Öffnung im Boden 10 zugänglich sein.

In dem ersten Schritt 801 wird ferner eine Transponderanordnung 4 mit einer UHF-Transpondereinrichtung 16 bereitgestellt. Beispielsweise kann in vorherigen Schritten zunächst eine auf einem flexiblen Trägerelement 18 angeordnete Transpondereinrichtung 16 bereitgestellt werden. Beispielsweise kann auf ein flexibles Trägerelement 18 zunächst die Antennenstruktur 20 und/oder das Anpassungsnetzwerk 22 aufgedruckt werden. Auch kann die Antennenstruktur 20 und/oder das Anpassungsnetzwerk 22 zumindest teilweise durch Ätzen, Lasern und/oder Stanzen aufgebracht werden. Anschließend kann eine geeignete integrierte Schaltung 24 aufgebracht werden.

Die genauen geometrischen Maße der Antennenstruktur 20 und/oder des Anpassungsnetzwerks 22 können insbesondere in Abhängigkeit des Hüllmaterials bestimmt und optimiert werden. Vorzugsweise können Materialparameter des Hüllmaterials erfasst, beispielsweise berechnet und/oder gemessen werden, und bei der Herstellung der UHF-Transpondereinrichtung 16 berücksichtigt werden.

Ferner kann ein Transponderaufnahmeelement 26 beispielsweise in Form eines Hohlkörpers 28 bereitgestellt werden. Das Transponderaufnahmeelement 26 kann in vorherigen Arbeitsschritten hergestellt worden sein. Insbesondere kann die (Außen-)Form des Transponderaufnahmeelements 26 derart gebildet werden, dass diese mit einer (Innen-) Form eines Hohlraumes 36 eines Getränkekastens 2, in welches die Transponderanordnung 4 eingesetzt werden soll, korrespondiert.

Das Trägerelement 18 mit der UHF-Transpondereinrichtung 16 kann dann umgeformt, beispielsweise gebogen oder gefaltet werden, derart, dass das Trägerelement 18 eine bestimmte Form einnimmt. Insbesondere kann das Trägerelement 18 ausgehend von der in Figur 2 dargestellten Ausgangsform derart umgeformt, dass es in den Hohlkörper 28 mit einer vorgebbaren (Innen-)Form eingeführt werden kann.

Beispielsweise kann das Trägerelement 18 in eine zylinderförmige Form gebracht werden, um es in einen zylinderförmigen Hohlkörper 28 einzubringen. Hierbei wird die Breite B und/oder die Länge L des Trägerelements 18 reduziert.

Anschließend wird das umgeformte Trägerelement 18 in den Hohlkörper 28 eingesetzt.

Optional kann die Transponderanordnung 4 auch mit einem Kernelement 34 versehen werden. Beispielsweise kann ein entsprechendes Kernelement 34, wie ein stabförmiger Kern 34 mit einer zu dem Hohlkörper 28 korrespondierenden Form, zunächst bereitgestellt werden. Mit anderen Worten kann ein zylinderförmiger Kern 34 für einen zylinderförmigen Hohlkörper 28 und ein quaderförmiger Kern 34 für einen quaderförmigen Hohlkörper 28 etc. bereitgestellt werden.

Dann kann das flexible Trägerelement 18 auf das Kernelement 34 angebracht und insbesondere entsprechend verbogen und/oder gefaltet werden. Beispielsweise kann für eine dauerhafte Verbindung zwischen Kernelement 34 und Trägerelement 18 eine Klebeschicht zwischen dem Trägerelement 18 und dem kernmaterial 34 vorgesehen sein. Dann kann das Trägerelement 18 zusammen mit dem Kernelement 34 in den Hohlkörper 28 eingesetzt werden.

Alternativ kann ein Kernelement 34 auch erst nach dem Umformen und Einsetzen des Trägerelements 18 in den Hohlkörper 28 eingeführt werden. Beispielsweise kann ein stabförmiger Kern 34 nachträglich eingesetzt werden. Alternativ oder zusätzlich kann eine flüssige Masse, wie einer Kunststoffmasse, in den verbleibenden Hohlraum gefüllt werden. Diese kann-dann beispielsweise durch eine Aktivierung aushärten.

Für eine möglichst einfache Integration der Transponderanordnung 4 in den Hohlraum 36 wird in einem nächsten Schritt 802 der Getränkekasten 2 in eine Halteeinrichtung eingespannt und in eine bestimmte Position bewegt. Insbesondere kann der Getränkekasten gedreht werden, derart, dass der Boden 10 nach oben ragt und ein Winkel zwischen einer horizontalen Bezugsebene, wie der Erdoberfläche, und einer Seitenwand 6 zwischen 10° und 90° eingestellt wird. Beispielsweise kann ein Winkel von ca. 30° eingestellt werden.

Die hergestellte und bereitgestellte Transponderanordnung 4 wird in einem nächsten Schritt 803 in diesen Getränkekasten 2 eingesetzt. Beispielsweise können entsprechende automatisierte Mittel vorgesehen sein. Wie bereits beschrieben wurde, kann der Hohlraum 36 ohnehin durch eine Öffnung im Boden 10 zugänglich sein. Die Transponderanordnung 4 kann in die Öffnung des Bodens 10 eingesetzt werden. Durch die Schwerkraft kann die Transponderanordnung 4 an die gewünschte Position ohne weitere Maßnahmen gebracht werden. Insbesondere kann zumindest ein Ende der Transponderanordnung 4 an die Innenseite der oberen Kante 8 der Seitenwand 6 angrenzen.

Es versteht sich, dass auch Hilfsmittel zur exakten Positionierung innerhalb des Hohlraums, wie ein an der Transponderanordnung 4 angebrachtes Verlängerungselement, vorgesehen sein können.

Zur Fixierung der Transponderanordnung 4 innerhalb des Getränkekastens 2 wird in einem Schritt 804 ein Haftmittel aufgebracht. Beispielsweise kann eine Sprühvorrichtung, welche in den Hohlraum 36 einführbar ist, vorgesehen sein, um ein Kunststoffhaftmittel auf die Transponderanordnung 4 aufzusprühen. Insbesondere wird ein Netz aus Kunststoff gesprüht. Erfindungsgemäß werden eine Mehrzahl von fadenförmigen Verbindungen zwischen der Seitenwand 6 bzw. den Innenwänden 40, 42 der Seitenwand 6 und der Transponderanordnung 4 zum Fixieren der Transponderanordnung 4 in dem Hohlraum 36 erzeugt. Durch das spinnennetzartige Kunststoffnetz kann die Transpondereinrichtung 4 elastisch im Getränkekasten 2 fixiert werden. Neben dem Vorteil, dass,diese Art der Fixierung unempfindlich gegenüber Stauchungen des Getränkekastens 2 aufgrund einer hohen Last (Stapelung 5 Paletten mit 40 Getränkekästen sind üblich) ist, kann bei einem Reinigungsprozess des Getränkekastens 2 Wasser ungehindert durch das Kunststoffnetz fließen.

Dann kann der Getränkekasten 2 ausgespannt (Schritt 805) und seiner bestimmungsgemäßen Verwendung zugeführt werden.

## Patentansprüche

1. Getränkekasten (2) zur Aufnahme einer Mehrzahl von Flüssigkeitsbehältern (60), umfassend:
- einen Boden (10),
- eine Mehrzahl von Seitenwänden (6), und
- mindestens eine Transponderanordnung (4) umfassend eine UHF-Transpondereinrichtung (16), die in mindestens einem Hohlraum (36) einer Seitenwand (6) integriert ist, wobei die Transponderanordnung (4) durch ein Haftmittel in dem Hohlraum (36) fixiert ist,
**dadurch gekennzeichnet, dass**
- -die UHF-Transpondereinrichtung (16) von dem Boden (10) um mindestens 60 % der Höhe der Seitenwand (6) beabstandet ist, und
- wobei das Haftmittel derart aufgebracht ist, dass eine Mehrzahl von fadenförmigen Verbindungen zwischen der Seitenwand (6) und der Transponderanordnung (4) zum Fixieren der Transponderanordnung (4) in dem Hohlraum (36) vorgesehen ist.

2. Getränkekasten (2) nach Anspruch 1, **dadurch gekennzeichnet, dass**
- die Transponderanordnung (4) ein flexibles Trägerelement (18) umfassend die UHF-Transpondereinrichtung (16) aufweist,
- wobei das Trägerelement (18) umgeformt ist, derart, dass das umgeformte Trägerelement (18) von einem Transponderaufnahmeelement (26) der Transponderanordnung (4) umschlossen ist.

3. Getränkekasten (2) nach Anspruch 2, **dadurch gekennzeichnet, dass**
- das Transponderaufnahmeelement (26) eine zu dem Hohlraum (36) der Seitenwand (6) korrespondierende Form aufweist,
- wobei das Transponderaufnahmeelement (26) insbesondere quaderförmig oder zylinderförmig gebildet ist.

4. Getränkekasten (2) nach einem der vorherigen Ansprüche, **dadurch gekennzeichnet, dass** die Transponderanordnung (4) die Innenseite der oberen Kante (8) der Seitenwand (6) kontaktiert.

5. Getränkekasten (2) nach einem der vorherigen Ansprüche, **dadurch gekennzeichnet, dass**
- die Transponderanordnung (4) von einer Ecke des Getränkekastens (2) um zumindest 3 cm, vorzugsweise um zumindest 5cm, beabstandet ist, und/oder
- die Transponderanordnung (4) von einer Mitte einer Seitenwand (6) des Getränkekastens (2) um zumindest 3 cm, vorzugsweise um zumindest 5cm, beabstandet ist.

6. Getränkekasten (2) nach einem der vorherigen Ansprüche, **dadurch gekennzeichnet, dass**
- an einer Seitenwand (6) eine erste Aufnahme (54) zum Aufnehmen eines Flüssigkeitsbehälters (60) vorgesehen ist,
- an der Seitenwand (6) mindestens eine weitere zu der ersten Aufnahme (54) benachbart angeordnete Aufnahme (54) zum Aufnehmen eines Flüssigkeitsbehälters (60) vorgesehen ist, und
- die Transponderanordnung (4) in der Seitenwand (6) in einem Grenzbereich (58) der benachbarten Aufnahmen (54) angeordnet ist.

7. Getränkekasten (2) nach Anspruch 6, **dadurch gekennzeichnet, dass** zumindest eine der benachbarten Aufnahmen (54) eine Eckaufnahme (54.1) ist.

8. Getränkekasten (2) nach einem der vorherigen Ansprüche, **dadurch gekennzeichnet, dass** die fadenförmigen Verbindungen aus einem elastischen Kunststoffmaterial gebildet sind.

9. Getränkekasten (2) nach einem der vorherigen Ansprüche, **dadurch gekennzeichnet, dass** der Hohlraum (36), in welchem die Transponderanordnung (4) angeordnet ist, ausschließlich durch eine Öffnung in dem Boden (10) des Getränkekasten (2) zugänglich ist.

10. Verfahren zur Integration einer Transponderanordnung (4) in einen Getränkekasten (2), insbesondere einen Getränkekasten (2) nach einem der vorherigen Ansprüche, wobei der Getränkekasten (2) einen Boden (10) und eine Mehrzahl von Seitenwänden (6) aufweist, umfassend:
- Bereitstellen der Transponderanordnung (4) umfassend eine UHF-Transpondereinrichtung (16),
- Einbringen der Transponderanordnung (4) in einen Hohlraum (36) einer Seitenwand (6) des Getränkekastens (2), und
- haftendes Fixieren der Transponderanordnung (4) in dem Hohlraum (36), **dadurch gekennzeichnet, dass** die UHF-Transpondereinrichtung (16) von dem Boden (10) um mindestens 60 % der Höhe der Seitenwand (6) beabstandet ist,
- wobei ein Haftmittel zur Fixierung der Transponderanordnung (4) in den Hohlraum (36) eingesprüht wird, derart, dass eine Mehrzahl von fadenförmigen Verbindungen zwischen der Seitenwand (6) und der Transponderanordnung (4) zum Fixieren der Transponderanordnung (4) in dem Hohlraum (36) gebildet werden.

11. Vorrichtung zur Durchführung des Verfahrens nach Anspruch 10, umfassend:
- mindestens eine Halteeinrichtung zum Einspannen des Getränkekastens (2),
- mindestens ein Einbringungsmittel zum Einbringen der Transponderanordnung (4) umfassend eine UHF-Transpondereinrichtung (16) in den Hohlraum (36) der Seitenwand (6) des Getränkekastens (2) mit einem Bodenabstand von mindestens 60% der Höhe der Seitenwand (6), und
- mindestens eine Sprühvorrichtung zum Aufbringen des Haftmittels in Form einer Mehrzahl von fadenförmigen Verbindungen zwischen der Seitenwand (6) und der Transponderanordnung zum Fixieren der Transponderanordnung (4) in dem Hohlraum (36).

12. System umfassend zumindest eine UHF-Transponderleseeinrichtung und mindestens einen Getränkekasten (2) nach einem der Ansprüche 1 bis 9.

## Claims

1. A beverage crate (2) for accommodating a plurality of liquid containers (60), comprising:
- a base (10),
- a plurality of side walls (6), and
- at least one transponder arrangement (4) comprising a UHF transponder unit (16), which is integrated in at least one cavity (36) of a side wall (6), wherein the transponder arrangement (4) is fixed by an adhesive agent in the cavity (36),
**characterised in that**
- the UHF transponder unit (16) is spaced from the base (10) by at least 60% of the height of the side wall (6), and
- wherein the adhesive agent is applied in such a manner that a plurality of thread-like connections is provided between the side wall (6) and the transponder arrangement (4) for fixing the transponder arrangement (4) in the cavity (36).

2. The beverage crate (2) according to Claim 1, **characterised in that**
- the transponder arrangement (4) has a flexible supporting element (18) comprising the UHF transponder unit (16),
- wherein the supporting element (18) is transformed in such a manner that the transformed supporting element (18) is enclosed by a transponder receiving element (26) of the transponder arrangement (4).

3. The beverage crate (2) according to Claim 2, **characterised in that**
- the transponder receiving element (26) has a shape corresponding to the cavity (36) of the side wall (6),
- wherein the transponder receiving element (26) is in particular formed cuboidally or cylindrically.

4. The beverage crate (2) according to one of the preceding claims, **characterised in that** the transponder arrangement (4) contacts the inside of the upper edge (8) of the side wall (6).

5. The beverage crate (2) according to one of the preceding claims, **characterised in that**
- the transponder arrangement (4) is spaced from a corner of the beverage crate (2) by at least 3 cm, preferably by at least 5 cm,
and/or
- the transponder arrangement (4) is spaced from a centre of a side wall (6) of the beverage crate (2) by at least 3 cm, preferably by at least 5 cm.

6. The beverage crate (2) according to one of the preceding claims, **characterised in that**
- a first reception (54) is provided on a side wall (6) for accommodating a liquid container (60),
- at least one further reception (54) for accommodating a liquid container (60), arranged adjacently to the first reception (54), is provided on the side wall (6), and
- the transponder arrangement (4) is arranged in the side wall (6) in a limit area (58) of the adjacent receptions (54).

7. The beverage crate (2) according to Claim 6, **characterised in that** at least one of the adjacent receptions (54) is a corner reception (54.1).

8. The beverage crate (2) according to one of the preceding claims, **characterised in that** the thread-like connections are formed from an elastic plastic material.

9. The beverage crate (2) according to one of the preceding claims, **characterised in that** the cavity (36), in which the transponder arrangement (4) is arranged, is accessible exclusively by means of an opening in the base (10) of the beverage crate (2).

10. A method for the integration of a transponder arrangement (4) into a beverage crate (2), particularly a beverage crate (2) according to one of the preceding claims, wherein the beverage crate (2) has a base (10) and a plurality of side walls (6), comprising:
- providing of the transponder arrangement (4) comprising a UHF transponder unit (16),
- introducing of the transponder arrangement (4) into a cavity (36) of a side wall (6) of the beverage crate (2), and
- adhesive fixing of the transponder arrangement (4) in the cavity (36), **characterised in that** the UHF transponder unit (16) is spaced from the base (10) by at least 60% of the height of the side wall (6),
- wherein an adhesive agent for fixing the transponder arrangement (4) is sprayed into the cavity (36) in such a manner that a plurality of thread-like connections are formed between the side wall (6) and the transponder arrangement (4) for fixing the transponder arrangement (4) in the cavity (36).

11. A device for carrying out the method according to Claim 10, comprising:
- at least one retaining device for clamping the beverage crate (2),
- at least one introducing means for introducing the transponder arrangement (4), comprising a UHF transponder unit (16) into the cavity (36) of the side wall (6) of the beverage crate (2) with a base clearance of at least 60% of the height of the side wall (6), and
- at least one spray device for applying the adhesive agent in the form of a plurality of thread-like connections between the side wall (6) and the transponder arrangement for fixing the transponder arrangement (4) in the cavity (36).

12. A system comprising at least one UHF transponder reading unit and at least one beverage crate (2) according to one of Claims 1 to 9.

## Revendications

1. Caisse à boissons (2) pour la réception d'une pluralité de conteneurs de liquides (60), laquelle comprend :
- un fond (10),
- une pluralité de parois latérales (6) et
- au moins un agencement de transpondeur (4), doté d'un système de transpondeur UHF (16), lequel est intégré dans au moins une cavité (36) d'une paroi latérale (6), sachant que l'agencement de transpondeur (4) est fixé dans la cavité (36) au moyen d'un agent adhésif,
**caractérisée en ce que**
- le système de transpondeur UHF (16) est distancé du fond (10) d'au moins 60 % de la hauteur de la paroi latérale (6), et
- sachant que l'agent adhésif est appliqué de telle manière qu'une pluralité de liaisons en forme de fils soit prévue entre la paroi latérale (6) et l'agencement de transpondeur (4) pour la fixation de l'agencement de transpondeur (4) dans la cavité (36).

2. Caisse à boissons (2) selon la revendication 1,
**caractérisée en ce que**
- l'agencement de transpondeur (4) est doté d'un élément de support (18) flexible qui comprend le système de transpondeur UHF (16),
- sachant que l'élément de support (18) est déformé de telle manière que ledit élément de support (18) déformé est entouré d'un élément de réception du transpondeur (26) de l'agencement de transpondeur (4).

3. Caisse à boissons (2) selon la revendication 2,
**caractérisée en ce que**
- l'élément de réception du transpondeur (26) est doté d'une forme qui correspond à celle de la cavité (36) de la paroi latérale (6),
- sachant que l'élément de réception du transpondeur (26) présente en particulier la forme d'un quadrilatère ou celle d'un cylindre.

4. Caisse à boissons (2) selon l'une des revendications précédentes,
**caractérisée en ce que** l'agencement de transpondeur (4) est en contact avec la face intérieure du bord supérieur (8) de la paroi latérale (6).

5. Caisse à boissons (2) selon l'une des revendications précédentes,
**caractérisée en ce que**
- l'agencement de transpondeur (4) est distancé d'au moins 3 cm, de préférence d'au moins 5 cm, d'un angle de la caisse à boissons (2),
et / ou
- l'agencement de transpondeur (4) est distancé d'au moins 3 cm, de préférence d'au moins 5 cm, du centre d'une paroi latérale (6) de la caisse à boissons (2).

6. Caisse à boissons (2) selon l'une des revendications précédentes,
**caractérisée en ce que,**
- sur une paroi latérale (6), est prévu un premier réceptacle (54) qui est destiné à recevoir un conteneur de liquide (60),
- sur la paroi latérale (6), est prévu au moins un autre réceptacle (54), qui, voisin du premier réceptacle (54), est destiné à recevoir un conteneur de liquide (60), et
- l'agencement de transpondeur (4) est disposé dans la paroi latérale (6), dans une région limite (58) du réceptacle (54) voisin.

7. Caisse à boissons (2) selon la revendication 6,
**caractérisée en ce que** l'un des réceptacles (54) voisins, au moins, est un réceptacle disposé en encoignure (54.1).

8. Caisse à boissons (2) selon l'une des revendications précédentes,
**caractérisée en ce que** les liaisons en forme de fils sont réalisées en matériau synthétique, élastique.

9. Caisse à boissons (2) selon l'une des revendications précédentes,
**caractérisée en ce que** la cavité (36), dans laquelle est logé l'agencement de transpondeur (4), est accessible exclusivement par une ouverture pratiquée dans le fond (10) de la caisse à boissons (2).

10. Procédé pour l'intégration d'un l'agencement de transpondeur (4) dans une caisse à boissons (2), en particulier dans une caisse à boissons (2) selon l'une des revendications précédentes, sachant que la caisse à boissons (2) est dotée d'un fond (10) et d'une pluralité de parois latérales (6), ledit procédé comprenant :
- Mise à disposition de l'agencement de transpondeur (4) doté d'un système de transpondeur UHF (16).
- mise en place de l'agencement de transpondeur (4) dans une cavité (36) d'une paroi latérale (6) de la caisse à boissons (2), et
- fixation par adhésion de l'agencement de transpondeur (4) dans la cavité (36), **caractérisé en ce que** le système de transpondeur UHF (16) est disposé à une distance du fond (10) qui représente au moins 60 % de la hauteur de la paroi latérale (6),
- sachant qu'un agent adhésif est pulvérisé dans la cavité (36) de sorte à réaliser une pluralité de liaisons en forme de fils entre la paroi latérale (6) et l'agencement de transpondeur (4) pour la fixation de l'agencement de transpondeur (4) dans la cavité (36).

11. Dispositif pour la réalisation du procédé selon la revendication 10, qui comprend :
- au moins un moyen de maintien pour le serrage de la caisse à boissons (2),
- au moins un moyen de mise en place pour installer l'agencement de transpondeur (4), comprenant un système de transpondeur UHF (16), dans la cavité (36) d'une paroi latérale (6) de la caisse à boissons (2), à une distance du fond qui correspond à au moins 60 % de la hauteur de la paroi latérale (6), et
- au moins un dispositif de pulvérisation pour l'application de l'agent adhésif, en une pluralité de liaisons en forme de fils, entre la paroi latérale (6) et l'agencement de transpondeur, pour la fixation de l'agencement de transpondeur (4) dans la cavité (36).

12. Système comprenant au moins un système de transpondeur UHF et au moins une caisse à boissons (2) selon l'une des revendications 1 à 9.
